# EUROPEAN PATENT SPECIFICATION

(11) **EP 3 456 444 B1**
(45) Date of publication and mention of the grant of the patent: **23.12.2020**
(21) Application number: 18194916.5
(22) Date of filing: 17.09.2018
(51) Int. Cl.: B23B 13/02, B23B 13/12

(54) **APPARATUS FOR FEEDING BARS**
VORRICHTUNG ZUM ZUFÜHREN VON STANGEN
APPAREIL POUR ALIMENTER EN BARRES

(30) Priority: 18.09.2017 IT 201700104231; 18.09.2017 IT 201700104237; 18.09.2017 IT 201700104242; 18.09.2017 IT 201700104246
(43) Date of publication of application: 20.03.2019
(73) Proprietor: Top Automazioni S.R.L., 47824 Poggio Torriana (RN) (IT)
(72) Inventor: BARGELLINI, Nicola, 47824 Poggio Torriana (RN) (IT); PISCAGLIA, Tomas, 47030 San Mauro Pascoli (FC) (IT)
(74) Representative: Villanova, Massimo

(56) References cited:
- EP-A1- 0 570 830
- EP-A2- 0 384 344

## Description

### Background of the invention

The invention relates to an apparatus for feeding bars to a machine tool, in particular to a sliding headstock lathe, i.e. a lathe in which longitudinal machining on the bar is obtained by an axial displacement of the bar and the rotating bar-holder spindle, instead of the tool.

Specifically, but not exclusively, the invention can be usefully used to perform machining on relatively small diameter bars, particularly on bars having a diameter between 3 and 50 mm, although it is possible to use bars with smaller and/or greater diameter.

Patent publication EP 0 570 830 A1 shows an apparatus as in the preamble of claim 1.

### Summary of the invention

An object of the invention is to provide a newly designed apparatus for supplying bars to a machine tool (for example a lathe) with a sliding head.

The object is solved by an apparatus for feeding bars according to independent claim 1. Preferable embodiments are defined in the dependent claims 2-15.

An advantage is to provide an apparatus suitable for machining workpieces, particularly bars, of relatively small diameter, for example less than 50 millimeters.

An advantage is to provide a device of considerable versatility which allows to feed pieces (bars) with different diameters without the need of replacing the guiding and/or advancing means of the piece.

An advantage is to make available an apparatus which can be adjusted simply and rapidly as the diameter of the pieces (bars) to be processed changes.

An advantage is to keep the tool/s always near a fixed guide in which the bar slides, ensuring stability and precision of the machining.

An advantage is to ensure automatic ejection of the portion of bar after machining in any operating condition.

An advantage is to allow automatic expulsion of the portion of bar after machining in a simple and reliable manner.

An advantage is to feed the bars by means of a bar-holder rod (lance) able to operate automatically on bars of very different diameters (for example diameters between 3 and 50 millimeters).

An advantage is to guarantee the correct and easy positioning of a bar in a loading zone of the apparatus from where the feed motion of the bar towards the tool of the machine tool will then start.

An advantage is to provide an apparatus that is constructively simple and economical for feeding bars to a machine tool.

An advantage is to provide a very versatile feeding apparatus for bars which can be adapted automatically to use with bars of different diameters.

### Brief description of the drawings

The invention can be better understood and implemented with reference to the attached drawings which illustrate non-limiting examples of embodiments of the invention, in which:

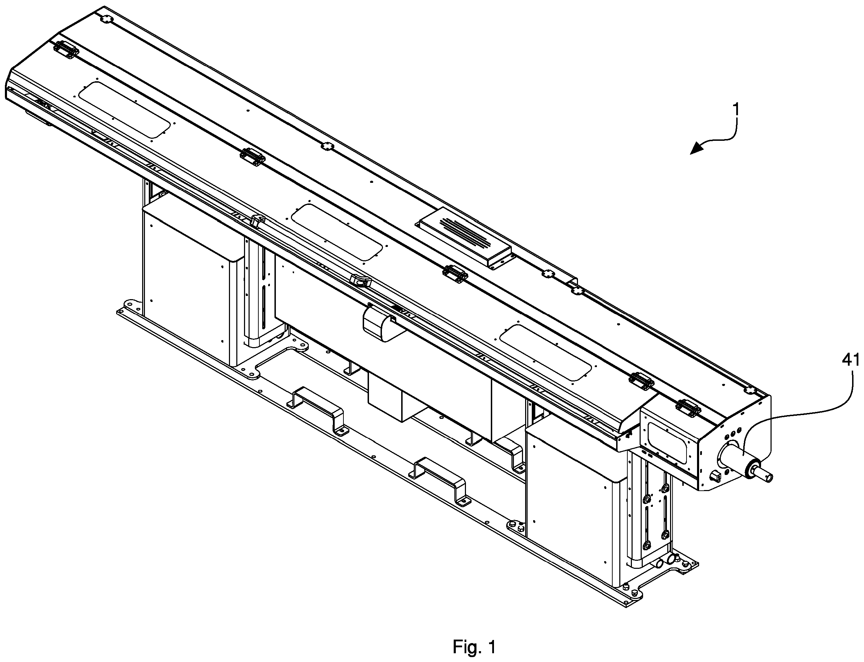

Figure 1 is a perspective view of an example of a bar feeding apparatus made according to the invention;

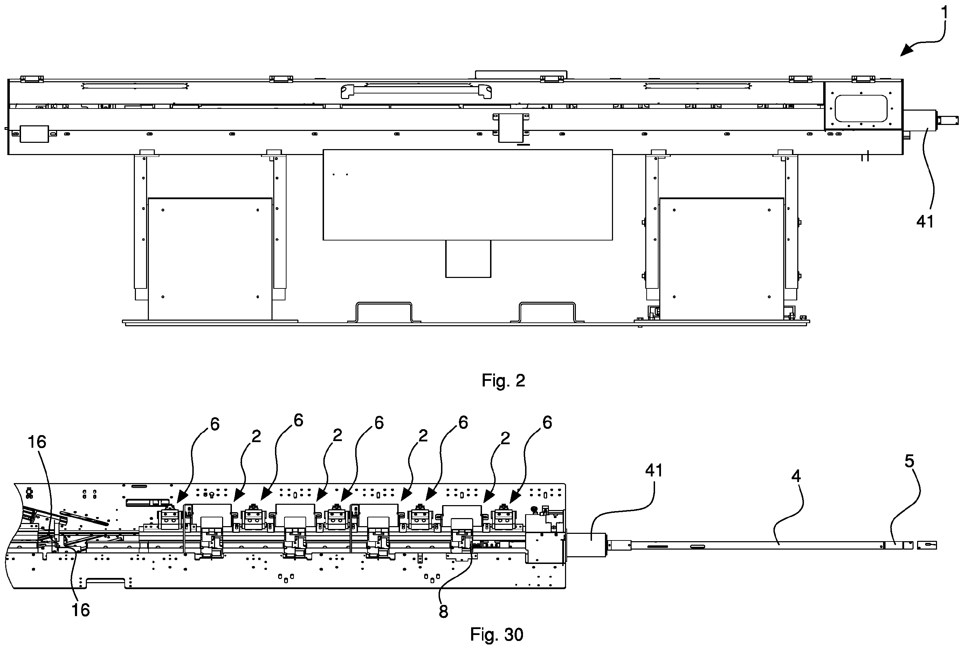

Figure 2 is a side view in vertical elevation of the apparatus of Figure 1;

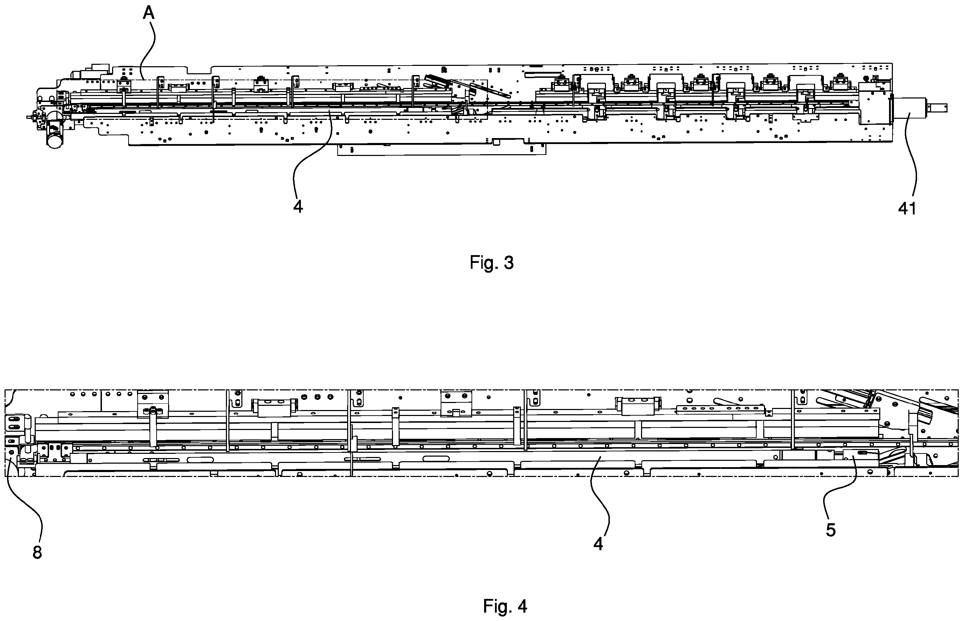

Figure 3 is a side view in vertical elevation of a part of the apparatus of Figure 1 which includes the sliding path of a bar;
Figure 4 shows the detail A of Figure 3;
Figure 5 is a vertical elevational view of a part of the apparatus of Figure 1 which includes the guide channel of the bar-holder rod where the guide channel is shown in section in closed position;
Figure 6 shows Figure 5 with the guide channel in open position;
Figure 7 is a vertical elevational view of a part of the apparatus of Figure 1 which includes a guide bearing of a bar where the guide bearing is shown in section in closed position on a bar of maximum diameter or in a position suitable for the guide of the bar-pusher rod;
Figure 8 shows the view of Figure 7 with the bar guide bearing in closed position on a bar of minimum diameter (for example 3 mm);
Figure 9 shows the view of Figure 7 with the bar guide bearing in open position to allow the loading of the bar in the guide channel;

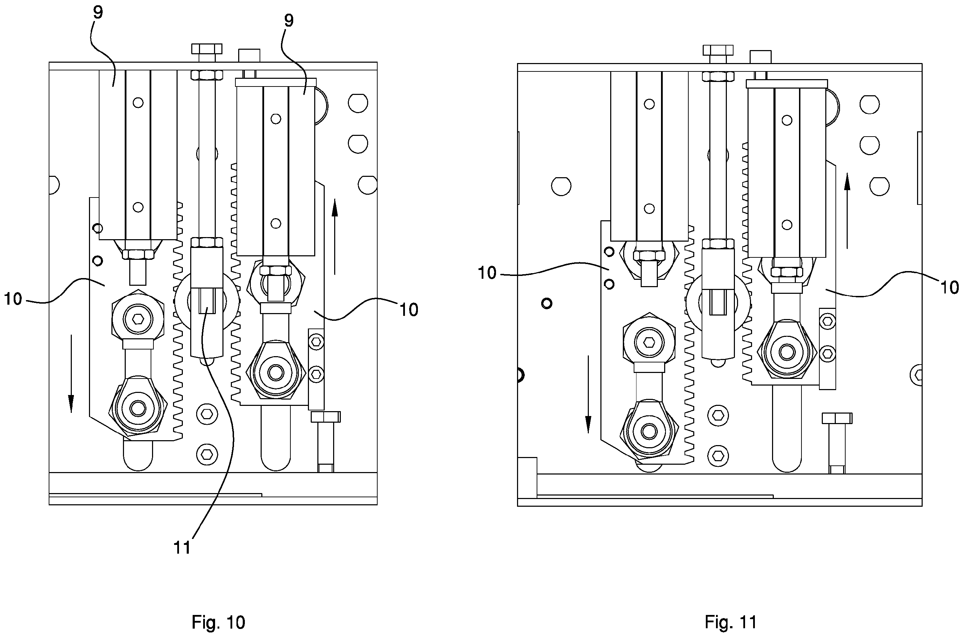

Figure 10 is a vertical elevational view of the driving mechanism of the bar guide bearing with the guide bearing in the position of Figure 7;
Figure 11 shows the driving mechanism of Figure 10 with the bar guide bearing in the position of Figure 8;

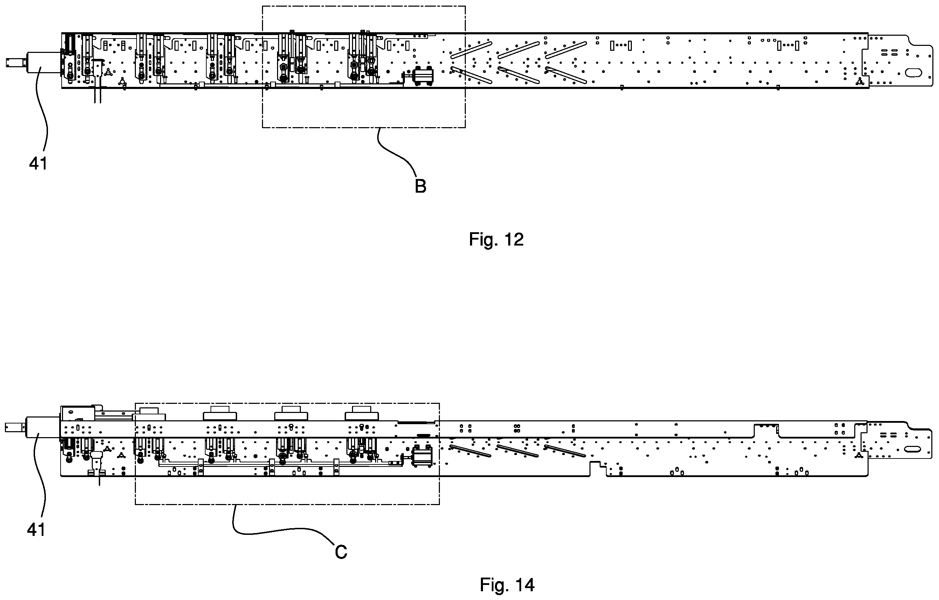

Figure 12 is a side view in vertical elevation of a part of the apparatus of Figure 1 on the opposite side with respect to Figure 3;

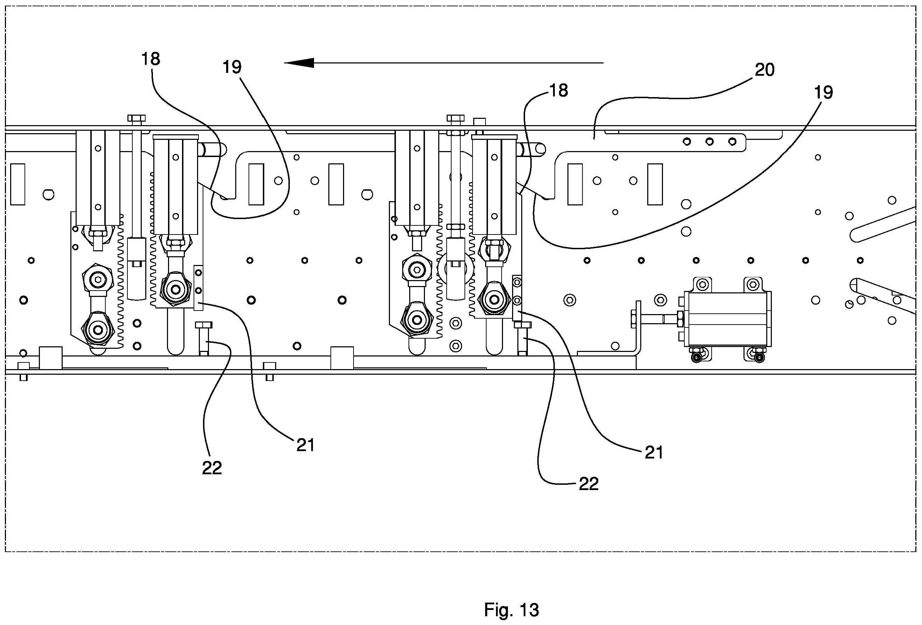

Figure 13 shows the detail B of Figure 12;
Figure 14 is a perspective view of the part of the apparatus of Figure 12;

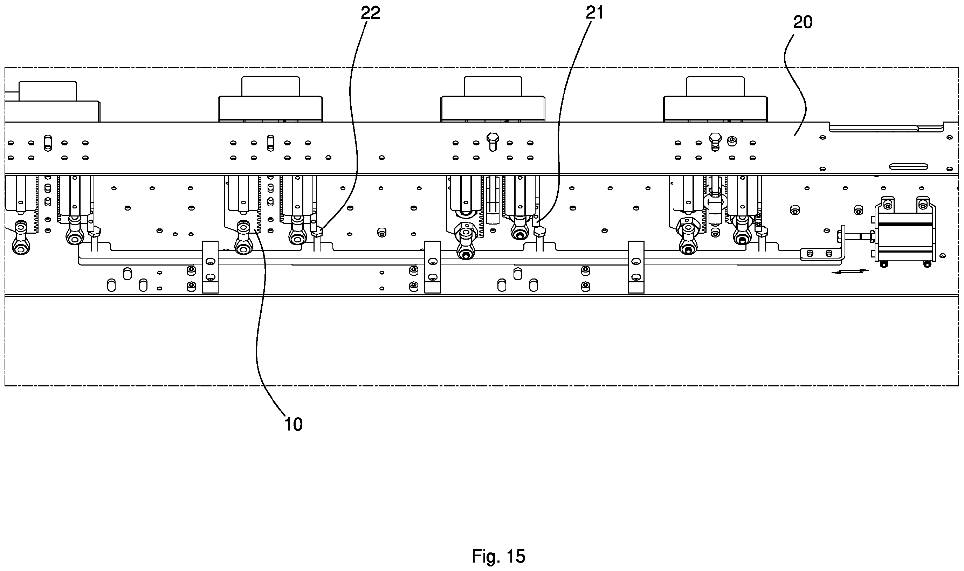

Figure 15 shows the detail C of Figure 14;
Figure 16 is a perspective view of a bar-holder rod, or lance, usable in the apparatus of Figure 1 to provide the feed motion to the bar;
Figure 17 is a side view in vertical elevation of the bar-holder rod of Figure 16 with the rod in an inside (initial) position;
Figure 18 is the view of Figure 17 with the rod in an outside (final) position;
Figure 19 is a side view in vertical elevation of a part of the apparatus of Figure 1 which includes a removing device for removing the bar piece from the bar-holder rod after processing the bar, with the removing device shown in closed position on the bar;

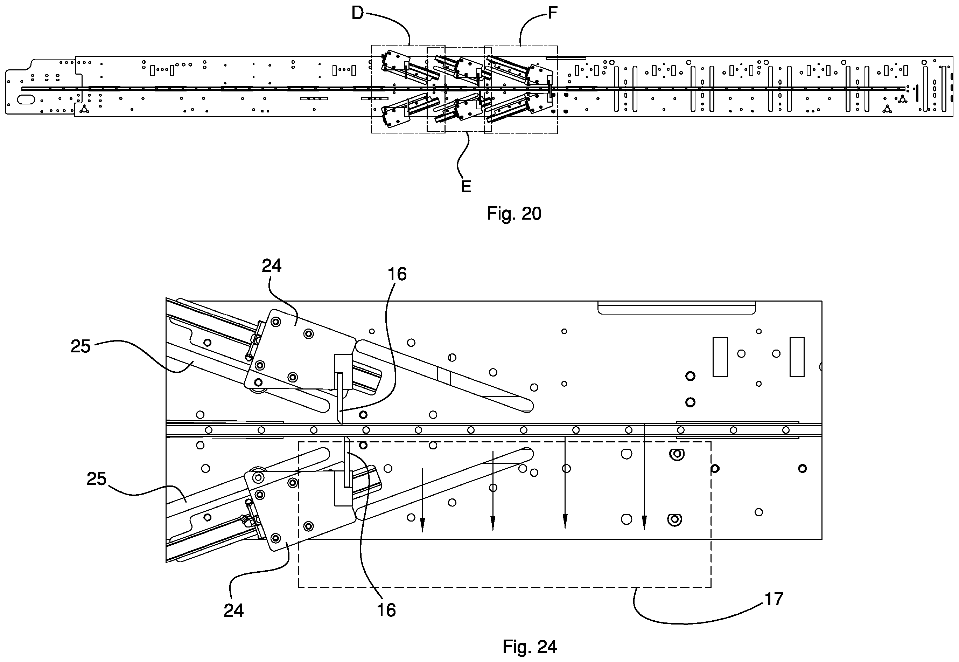

Figure 20 is a side view of Figure 3 with some parts cut away to better highlight three possible positions for the same number of devices for removing the bar piece;

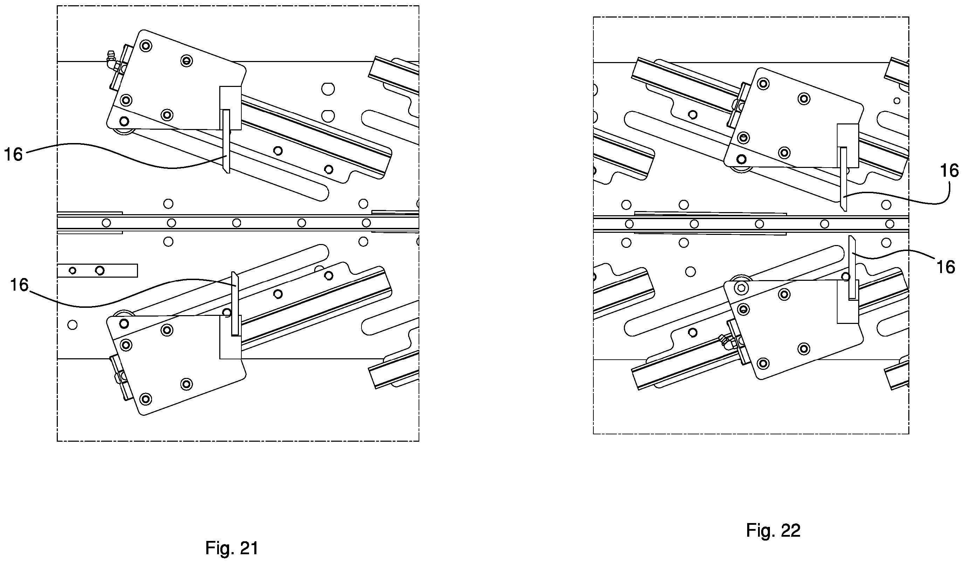

Figure 21 shows the detail D of Figure 20 in which a first removing device is shown in the open position;
Figure 22 shows the detail E of Figure 20 in which a second removing device is shown in an intermediate position;

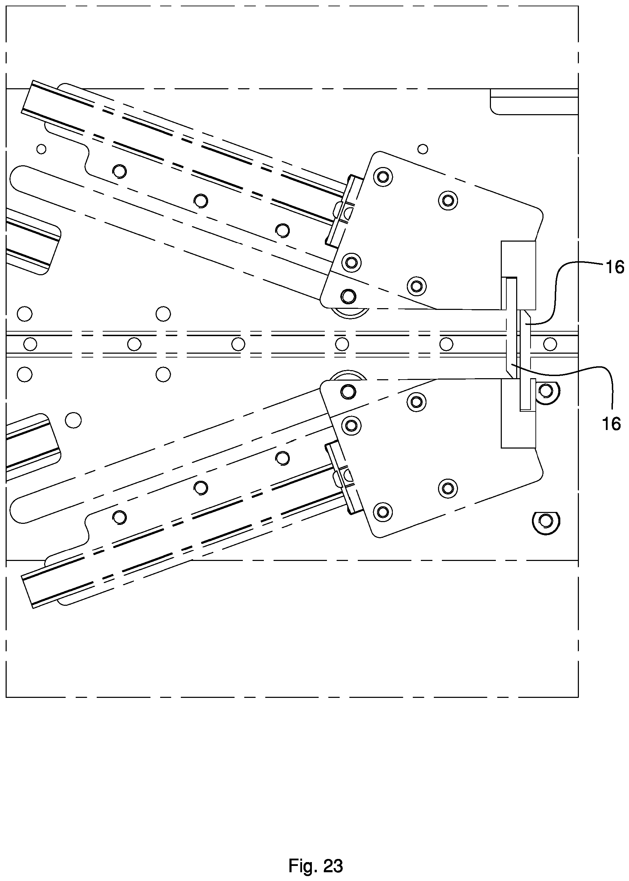

Figure 23 shows the detail F of Figure 20 in which a third removing device is shown in a closed position on the bar;
Figure 24 shows a detail of Figure 20 which includes the area of fall of the bar piece;
Figure 25 is a side view opposite to the view of Figure 20;
Figure 26 shows the detail G of figure 25;

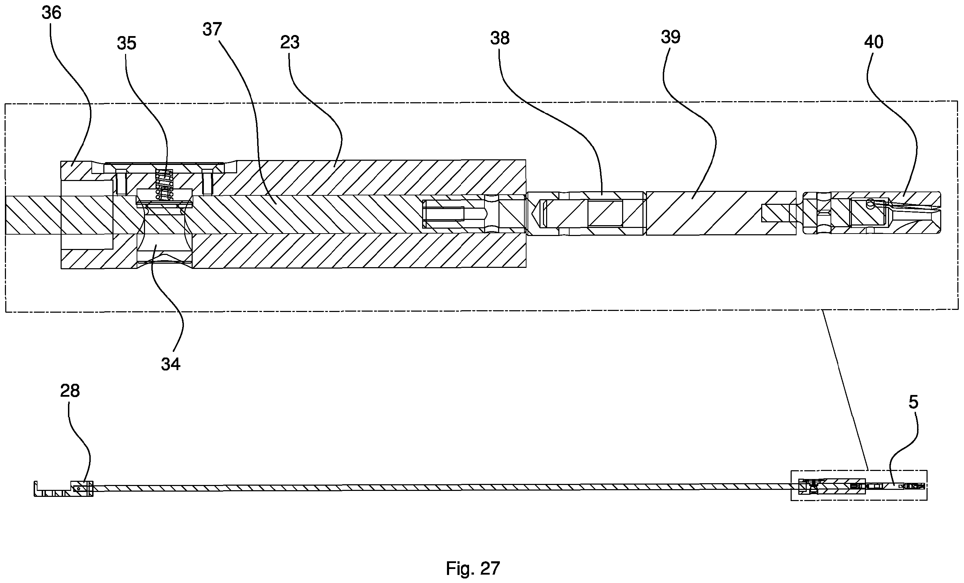

Figure 27 is a longitudinal section, with an enlarged detail, of a bar-holder rod similar to that of Figure 16;
Figure 28 is a vertical elevational view of a part of the apparatus of Figure 1 in which the bar-holder rod 4 of Figure 27 is in an operating phase in which the sleeve 23 allows the sliding of the smaller diameter portion of the rod 4;
Figure 29 is a section of Figure 28 according to a vertical plane;
Figure 30 is a side view in vertical elevation of a portion of the apparatus of Figure 1 in which the bar-holder rod 4 is in the outside position as in Figure 18.

### Detailed description

Referring to the aforesaid figures, as a whole it has been indicated with 1 an apparatus for feeding bars to a machine tool, in particular to a machine tool (lathe) with a sliding head. The feeding apparatus 1 is suitable for providing the bar with the axial displacement (feed motion) useful for performing a longitudinal machining on the bar itself by at least one tool of the machine tool (lathe), while the rotating spindle of the machine tool performs the same axial displacement together with the bar. The feeding apparatus 1, or bar feeder, may be used, in particular, to feed bars with a relatively small diameter, for example less than 32 millimeters, or less than 38 millimeters, or less than 42 millimeters, or less than 50 millimeters. In particular, it is possible to use the apparatus 1 for bars up to a diameter of 8 mm, or 3 mm, or even smaller.

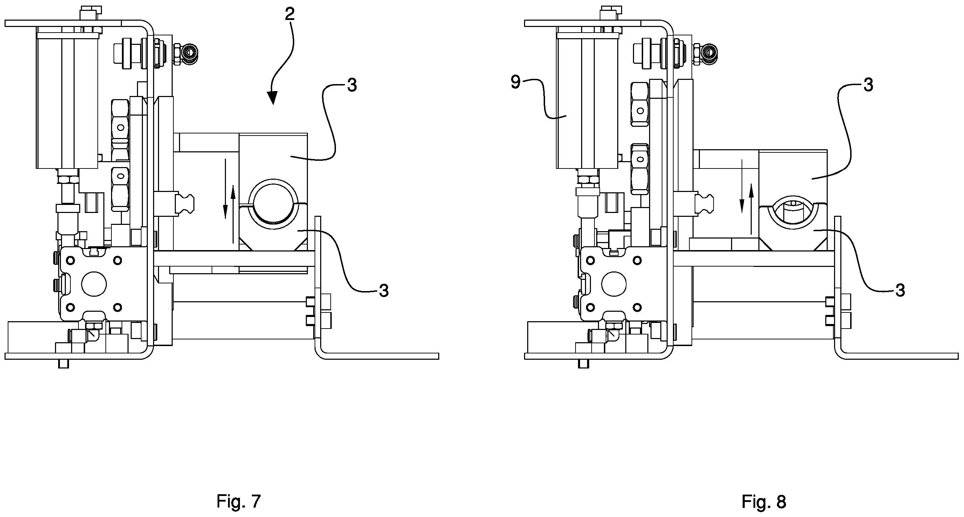

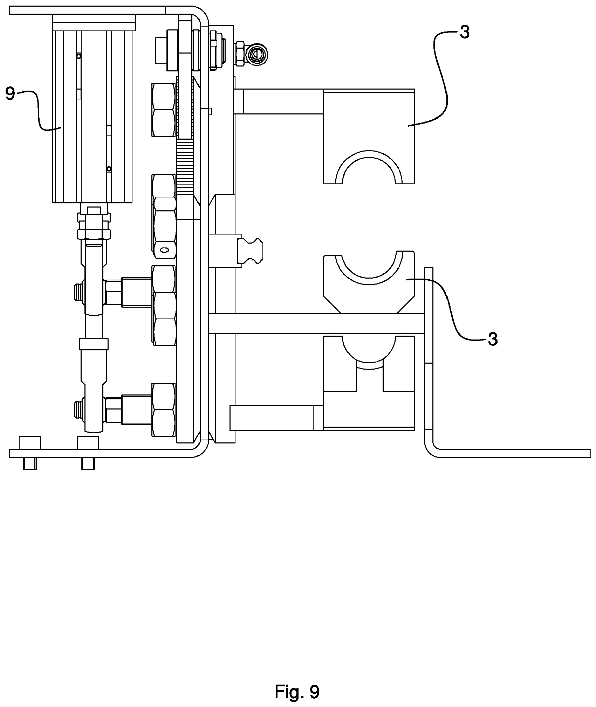

The feeding apparatus 1 comprises first guide means configured to define a horizontal straight sliding path for a bar. The first guide means comprises may a plurality of guide units 2 of the bar. Each bar guide unit 2 comprises at least two half-bearings 3 which cooperate with each other to define an opening for the guided passage of the bar. The two half-bearings 3 are movable with the possibility of assuming at least one open position and a plurality of closed positions (Figures 7 and 8) so as to adjust the width of the opening to allow the guided passage of bars of different diameters. In the open position (Figure 9) the two half-bearings are distant from each other to free the sliding path, in particular to allow the loading of a new bar to be advanced and/or to allow the passage of an element with a larger diameter of the bar, for example a lance or bar transport rod, as will be better explained below.

The two half-bearings 3 may comprise, in particular, a lower half-bearing having a semi-cylindrical shape concave surface facing upward and an upper half-bearing having a semi-cylindrical shaped concave surface facing downward. At least one of the two half-bearings 3 may be movable, in particular in a straight direction, for example a vertical direction. In the specific case, both the two half-bearings 3 are movable in a straight (vertical) direction.

The feeding apparatus 1 may comprise, in particular, two distinct motor means, one for actuating the movement of one of the two half-bearings 3 and the other for actuating the movement of the other of the two half-bearings 3. The two aforesaid distinct motor means may comprise, as in this example, two linear actuators 9. These motor means may be, in particular, fluid driven (for example pneumatic actuators). The two linear 1180932be EP Testo EN.doc actuators 9 may comprise, in particular, two parallel movement axes parallel to one another.

The feeding apparatus 1 may comprise, in particular, a motion transmission system which connects the two half-bearings together in such a way that a movement of a half-bearing in one direction corresponds to a movement of the another half-bearing in the opposite direction. This motion transmission system may include, in particular, a gear system. This gear system may comprise, as in this example, at least two racks 10 connected solidly to the two half-bearings 3. The two racks 10 may be parallel to each other (arranged vertically). The gear system is designed in such a way that a movement of a rack in one direction corresponds to an equal and opposite movement of the other rack in the opposite direction. The gear system may comprise, for example, a toothed wheel coupled to both racks. The gear system may also comprise an adjustment device 11 (for example of the screw type) for the correct assembly and operation of the system itself.

The feeding apparatus 1 comprises a rod 4 or lance which is movable along the aforesaid sliding path of the bar and which is provided with gripping means configured to take a bar. Said gripping means may include, in particular, gripping means of known type, for example a quick coupling 5 with spring clamp, or other hooking systems for a bar.

The feeding apparatus 1 comprises second guide means for guiding a sliding of the aforementioned rod 4. The guided sliding of the rod 4 may, in particular, be aligned with the aforesaid sliding path of the bar. The second guide means may comprise, as in this example, a plurality of guide units 6 of the rod which are arranged along the sliding path spaced from one another. In particular, it is possible to arrange the guide units 6 of the rod, or at least a part of such units 6, interspaced with the guide units 2 of the bar, or at least with a part of said units 2, alternating a unit 6 with a unit 2.

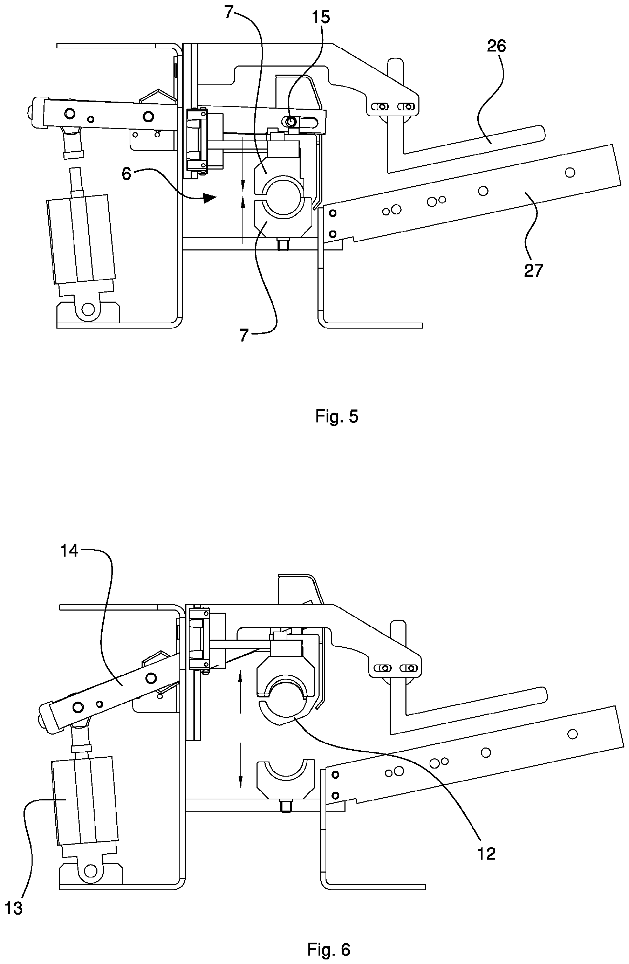

Each rod guide unit 6 may comprise, in particular, at least two half-bearings 7 provided with the possibility of assuming at least one closed position and at least one open position. In the closed position (Figure 5) the half-bearings 7 may work together to define a sliding seat for the rod. In the open position (FIG. 6), the half-bearings 7 may be distant from one another to allow loading of a rod into a loading zone.

The feeding apparatus 1 may comprise, in particular, moving means for moving the rod 4 between at least two areas of the apparatus, in particular a loading zone (Figure 5) and a non-obstruction zone (Figure 6). In the loading zone, the rod 4 may be aligned with the sliding path. In the non-obstruction zone, the rod 4 may be placed (for example raised) so as not to occupy the loading zone to allow the loading of a bar in the zone itself.

The feeding apparatus 1 comprises a movable conveyor slider 8 which is configured to push a bar away from the loading zone along the sliding path, in particular so that it is possible to reposition the rod 4 in the loading zone. The slider 8 may be moved by means of a known type of handling system, for example a system comprising a flexible closed-loop transport member (for example a chain) which may slide controlled by a motor (for example an electric motor).

The conveyor slider 8 is configured to push the rod 4, for example starting from the loading zone, along the sliding path. This thrust of the rod 4 is suitable, in particular, to provide a feed motion to the bar after the latter has been gripped by the gripping means of the rod 4.

The aforesaid moving means may comprise, in particular, lifting means susceptible of assuming at least one lower inactive position (Figure 5) and at least one upper active position (Figure 6). In the lower inactive position the lifting means are located under the rod 4 at the loading zone, when the half-bearings 7 of the various guide units 6 of the rod are in the aforementioned closed position. In the upper active position, the lifting means supports the rod 4 (in the raised position) in the aforesaid non-obstruction zone, when the half-bearings 7 of the various guide units 6 of the rod are in the aforementioned open position.

The lifting means may comprise, as in this example, a plurality of support elements 12 distributed spaced from one another in a direction parallel to the sliding path. Each support element 12 may comprise, in particular, a hook or other support element having a concave surface (support seat) with the concavity facing upwards, to receive the rod 4 in contact with it.

Each rod guide unit 6 may include, in particular, a lower half-bearing 7 having a concave surface facing upward and an upper half-bearing 7 having a concave surface facing downward. The lifting means may be movable, as in this example, in solidarity with the upper half-bearings 7 of the guide units 6 of the rod 4.

The feeding apparatus 1 may comprise, in particular, motor means for driving the movement of the upper half-bearings 7 of the rod guide units 6, together with the support elements 12 (rod lifting hooks). In particular, each of the aforesaid rod guide units 6 is provided with its own motor means, distinct from the driving means of the other guide units 6.

For each of the aforesaid rod guide units 6, the lower half-bearing 7 may be fixed (integral with a frame of the apparatus 1) and the upper half-bearing 7 may be movable driven by an actuator 13 (in particular linear, for example a pneumatic cylinder) by means of a glyph mechanism comprising a rocker arm 14 which is connected to a movable element of the actuator 13 (plunger of the linear actuator) and which is provided with a longitudinal groove within which a pin 15 integral with the upper half-bearing 7 and/or with the support element 12.

As in this example, at least one of the two aforesaid half-bearings 7 (in this case the upper half-bearing 7) may be movable in a rectilinear direction, for example vertical. The aforementioned lifting means may also be movable in a straight direction, for example vertical.

The aforesaid conveyor slider 8 may be configured, as said, to move a bar away from the loading zone along the sliding path, so as to allow the aforesaid moving means to bring the rod 4 back (in this case by means of a downward movement) from the (upper) non-obstruction zone to the (lower) loading zone. The conveyor slider 8 may be configured, as mentioned, to move the rod 4 to supply the feeding motion for a machining of a rod which has been taken from the rod 4 itself.

The conveyor slider 8 may be configured to retract the rod 4 along the sliding path in a retraction direction which is opposite to the aforementioned feed direction, so as to return the rod 4 to the loading zone, after processing the bar, with the rod 4 which holds a portion of bar to be unloaded.

The feeding apparatus 1 may comprise, in particular, at least one pair of jaws 16 which may be configured to grip at least a portion of bar H taken from the rod 4, in particular when the rod 4 is in the loading zone or near the zone itself.

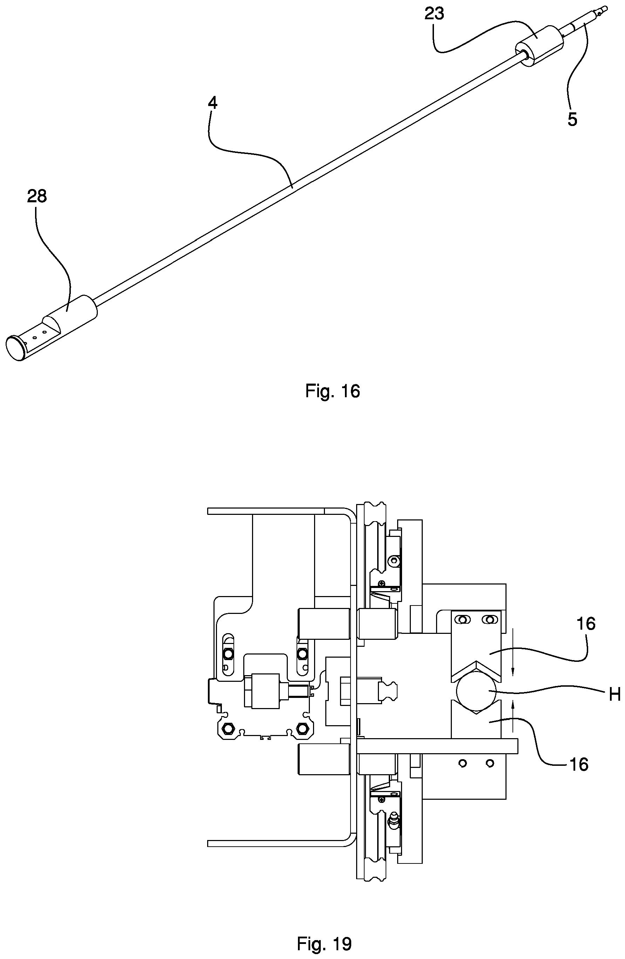

The jaws 16 may be capable of performing at least one opening movement between a closed gripping position (Figure 19) and an open release position. The closed gripping position allows, in particular, to safely carry out the operation of hooking the bar by the rod 4 before machining and/or the operation of releasing the bar portion from the rod 4 after machining. In the open release position it is provided that the bar portion is safely and reliably discharged into a discharge zone 17 (for example, thanks to a chute).

The aforesaid opening movement may comprise, in particular, for at least one or both of the aforesaid jaws 16, at least one component of motion parallel to the sliding path (horizontal) to generate a free space for gravity fall of the bar portion released from the two jaws 16 in open position.

As said, it may be provided, in particular, that the jaws 16 may be closed to grasp a bar still to be machined which is in the sliding path and therefore allow the means for gripping the rod 4 to take the bar while the latter is held by the two jaws 16. The jaws 16 may then be opened to allow the rod 4 to provide the aforesaid feed motion for machining a bar which has been taken by the gripping means (quick coupling 5).

The feeding apparatus 1 may comprise, in particular, an unloading zone 17 arranged to collect a portion of bar which falls by gravity released by the two jaws 16 in open position.

The feeding apparatus 1 may comprise, in particular, two or more rods 4 of different lengths that can be used selectively. In particular, it is possible to make the rod in two or more portions, for example one or two end portions and at least another portion, in particular an intermediate portion comprised between two end portions. It is possible to provide that one of the aforesaid rod portions is interchangeable in such a way as to make the aforesaid two or more rods 4 of different lengths always using, in each assembly, the same rod portion(s) and changing only the interchangeable portion(s) of rod(s). In this example, the use of two or more intermediate interchangeable rod portions is provided, while the rod end portions may be used in all available assemblies, wherein the interchangeable intermediate portions may, in general, be much longer than the end portions.

The feeding apparatus 1 may in particular provide that the pair of jaws 16 can be positioned selectively in two or more different positions (in this specific example three positions) arranged along the sliding path and spaced apart the one from the other so that, whatever the length of the rod 4 used, it is possible to place the pair of jaws 16 in the vicinity of said gripping means when the latter takes a portion of bar in said loading zone. The pair of jaws may thus be operated to grip at least one bar portion at the bar portion unloading zone according to the length of the rod 4.

The feeding apparatus 1 may comprise, in particular, an actuator 29 (for example a pneumatic cylinder) configured to actuate the movement of the aforesaid pair of jaws 16, the actuator simultaneously operating both jaws 16. This movement may in particular comprise at least one component of motion perpendicular to the aforementioned sliding path to allow the gripping of a bar which is located in the path itself.

Each pair of jaws 16 may comprise, as in this example, an upper jaw 16 with a concave surface facing downwards and a lower jaw 16 with a concave surface facing upward. The jaws may be placed one above and the other below the sliding path.

The lower jaw 16 may be movable in a (straight) direction oblique with respect to the sliding path. The upper jaw 16 may be movable in a (straight) direction oblique with respect to the sliding path. The upper jaw 16 may be movable in a direction symmetrical to the direction of motion of the lower jaw 16, considering as the axis of symmetry the axis (rectilinear and horizontal) defined by the sliding path.

The actuator 29 may be connected to the jaws 16 by means of an actuation mechanism comprising a body 30 (for example in the form of a plate) fixed to a movable element of the actuator 29. The actuation mechanism may comprise two pins 31 (one for each jaw 16) sliding within a same sliding guide 32 (slot) disposed on the body 30. The two pins 31 are also slidable within two respective sliding guides 33 (slots) arranged on the frame of the apparatus. The guide 32 may be, as in this example, vertical. The guides 33 may be, as in this example, oblique. The actuator 29 may comprise, as in this example, a linear actuator with a horizontal axis. The aforesaid actuation mechanism allows to move both jaws 16 in a coordinated manner with a univocal movement of the actuator 29.

The lower jaw 16 in the open release position is hidden vertically below at least a portion of the second guide means, in particular vertically below at least one half-bearing 7 of a guide unit 6.

The mutual distance in the vertical direction between the concave surface facing downward (upper jaw 16) and the concave surface facing upward (lower jaw 16) is adjustable to allow grasping bars of different diameters.

The feeding apparatus 1 may comprise, in particular, for each of the aforesaid jaws 16, a slide 24 which carries the respective jaw 16. Each slide 24 may carry, as in this example, the respective pin 31. Each slide 24 may be coupled, as in this example, to a respective sliding guide 25.

At least one of the two half-bearings 3 of each bar guide unit 2 is provided with a stop end 18. The feeding apparatus 1 comprises a plurality of cam profiles 19, one for each bar guide unit 2. Each cam profile 19 is arranged, in particular, to interact in contact with the stop end 18 of the respective bar guide unit 2 to act as an end of stroke. The end-of-stroke coupling between the stop end 18 and the cam profile 19 defines a maximum amplitude of the closing movement of the half-bearing 3 provided with the stop end 18, that is to say, it limits the closure of the bar guide unit 2 on the bar.

Each cam profile 19 is adjustable so as to vary the aforesaid maximum amplitude (i.e. the stroke of the half-bearings 3) as a function of the diameter of the bar, so that the bar guide unit 2 may be configured in the correct position depending on the size of the bar to be machined.

The cam profile 19 may be adjustable, as in the specific example, by virtue of the fact that the profile itself may be positioned in an adjustment direction. This adjustment direction may be, in particular, parallel to the sliding path of the bar. The cam profile 19 may comprise, as in this example, an inclined abutment surface. The stop end 18 integral with the half-bearing 3 may comprise an abutment counter-surface intended to abut against the aforementioned inclined abutment surface. The stop end 18 (counter-abutment surface) may be with the same inclination of the cam profile 19 (abutment surface).

The feeding apparatus 1 may comprise, in particular, a support 20 which solidly bears the aforesaid plurality of cam profiles 19. The actuation of a movement of the support 20 may be provided for the purpose of positioning in an adjustable manner the various cam profiles 19 together with each other.

It is possible to provide, for at least one or each of said bar guide units 2, that at least one of the two half-bearings 3 is provided with an abutment 21. The feeding apparatus 1 may comprise, in particular, a plurality of counter-abutments 22, for example fixed to the frame of the apparatus 1. Each counter-abutment 22 may be arranged to interact in contact with a respective abutment 21 of the respective bar guide unit 2 to act as a limit stop which defines a maximum amplitude of the opening movement of the half-bearing 3 provided with the aforementioned abutment 21. The end-of-stroke coupling between the abutment 21 and the counter-abutment 22 defines a maximum amplitude of the opening movement of the half-bearing 3 equipped with the abutment 21, that is, it limits the opening of the bar guide unit 2.

The position of each counter-abutment 22 is adjustable to vary the aforesaid maximum amplitude of the opening movement. The position of each counter-abutment 22 may be adjusted by, for example, a screw coupling.

The rod 4 may further comprise a first portion provided with a first diameter and a second portion provided with a second diameter. The second diameter may be smaller than the first diameter. The gripping means (quick coupling 5) may be arranged at one end of the rod 4 next to the second portion (with a smaller diameter) and away from the first portion (with a larger diameter).

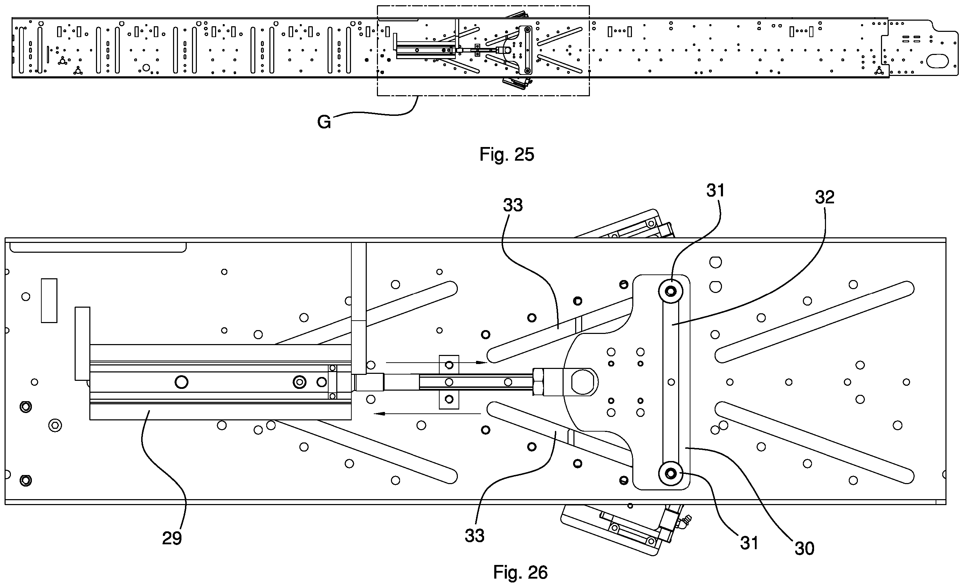

The feeding apparatus 1 may comprise, in particular, a centering sleeve 23 within which the second portion of rod 4 may slide. The centering sleeve 23 may be surrounded, in particular, by the half-bearings 3 of at least one of the aforementioned bar guide units 2. The half-bearings 3 which surround the centering sleeve 23 may be operated for locking the centering sleeve 23 exerting a pressure from the outside, for example by means of a pressure exerted on a locking device which may comprise, according to a specific example, a locking pin 34 (shown in Figure 26) provided with a release mechanism with return elastic means 35. With 36 a closure cover has been indicated for the safety and maintenance of the elastic means 35, with 37 a longitudinal sliding portion of the rod 4, with 38 a rotor with which one end of the rod 4 is provided for the rotating connection to the bar, with 39 a reduction nipple for the connection with the clamp, with 40 the actual gripping clamp with the bar.

The centering sleeve 23 may be provided, in particular, with an internal diameter equal to the aforesaid second diameter of the rod 4 and of an external diameter equal to the aforesaid first diameter of the rod 4.

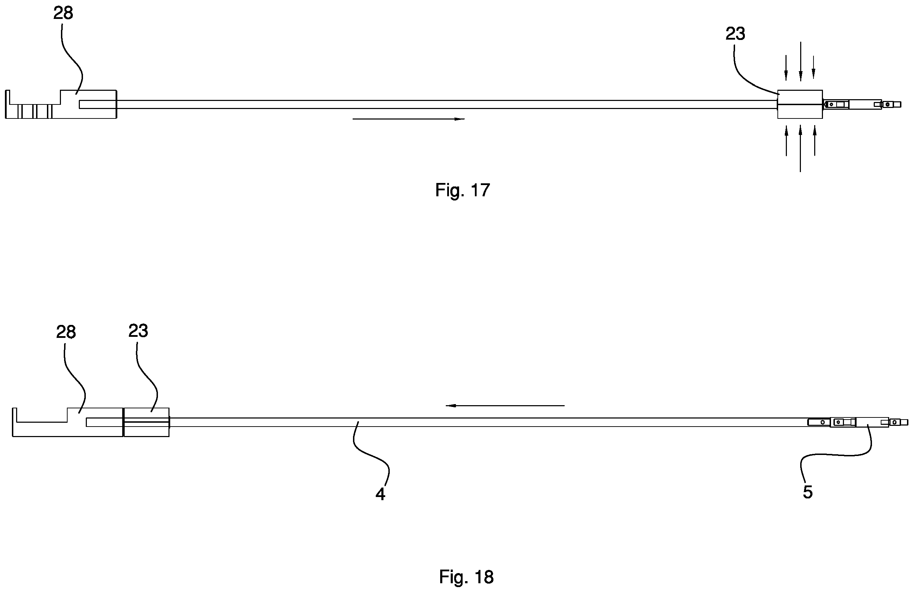

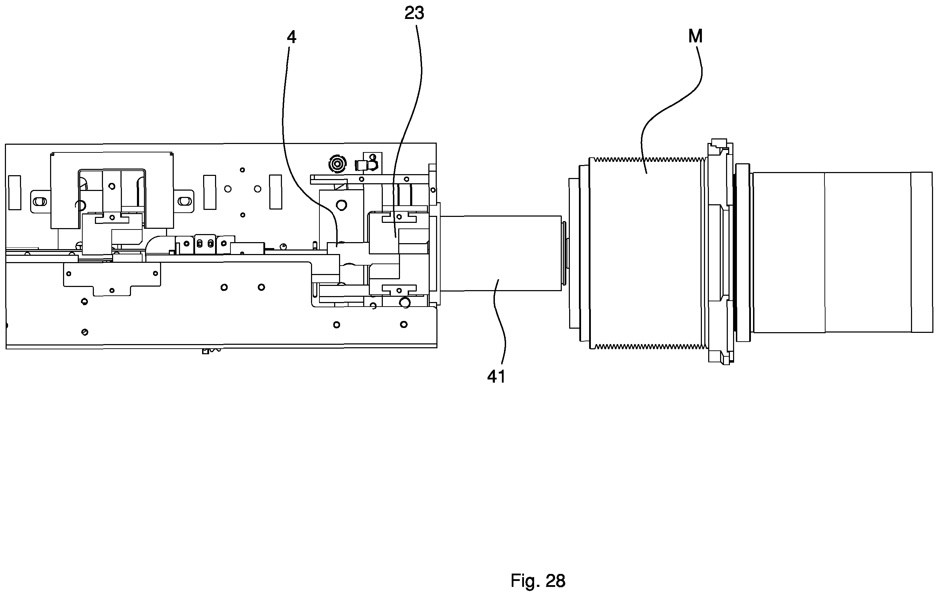

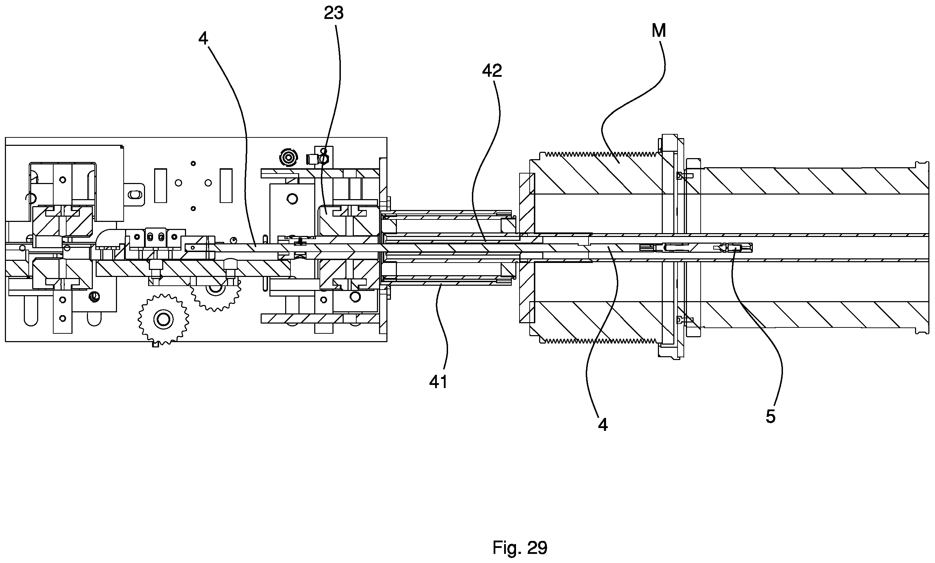

The centering sleeve 23 allows the apparatus 1 to feed bars with a relatively small diameter (for example a diameter equal to or less than 12 millimeters) without the need of replacing the respective rod guide means. When these bars of reduced diameter need to be fed, it is possible to replace only a portion of a rod with a smaller diameter, to allow adaptation to the gripping end 5 with a rotor suitable for rotating the bar, while maintaining the same rod guide means, thanks to the centering executable by the sleeve 23. In this case the rod 4 and the sleeve 23 may slide with respect to each other while the bar, pushed by the rod 4, slides at the outlet starting from the initial configuration of Figure 16 to the final configuration of Figure 17. Figures 28 and 29 show a configuration (intermediate) in which the sleeve 23 is unlocked with the possibility of axial sliding of the rod 4 and in which the sleeve 23 is located near the mandrel M of the machine tool (sliding head lathe) which rotates the bar. 41 indicates a telescopic element 29 which belongs to the apparatus 1 and which is arranged in the outlet area located on the side of the apparatus 1 adjacent to the machine tool. 42 indicates an adaptation reduction for the movable rod portion 4 with reduced diameter. Thanks to the sleeve 23 (whose external diameter is equal to the outside diameter of the hooking end 28 and whose internal diameter allows the sliding of the rod portion with a smaller diameter) it is possible to use the rod 4 provided with a gripping end 5 suitable for bars with very small diameter (for example less than 12 mm) without replacing the guide units 6 of the rod itself.

The operation of the feeding apparatus 1 may include, in particular, the following operating steps.

A first step may comprise the operation of raising the rod 4 present in the loading zone by means of the various supporting elements 12 which provide for raising the rod 4 to bring it into the non-obstruction (upper) zone, on command of the actuators 13. This first step has the purpose of freeing the loading zone to allow loading of a bar destined for machining.

A second step may include the operation of introducing a bar into the loading zone. The introduction of a bar may take place, for example, by depositing the bar which may be guided by anti-overlapping means 26, which favor the ordered feeding of the bars one by one, preventing the bars from overlapping and accumulating, and/or by chute means 27 which individually guides a bar (which will pass between the chute means 27 and the anti-overlapping means 26) within the guide units 2 placed in open position to receive the bar.

A third step may comprise the operation of moving the bar away from the loading zone by advancing the slider 8 which pushes the bar in the axial direction of exit along the sliding path, in order to free the area of loading in order to reposition the rod 4. After the bar has been moved away, the cursor 8 returns back to the initial position.

A fourth step may comprise the operation of lowering the rod 4 to place it again in the loading zone, by moving down the support elements 12 actuated by the actuators 13.

This step may further comprise the operation of coupling the rod 4 with the bar by means of the quick coupling 5.

A fifth step may comprise the operation of coupling the slider 8 to the rod in which the slider 8 is coupled (for example with interlocking coupling) to a hooking end 28 of the rod 4.

A sixth step may comprise the operation of advancing the rod 4 in the exit axial direction towards the tool of the machine tool (lathe) to perform the machining on the bar. This operation of feeding the bar to the lathe takes place by virtue of the slider 8 which is moved by the motorized chain conveyor device and which pushes the rod 4 which, in turn, is coupled to the bar.

During the feeding of the bar, the bar is coupled to the rotating spindle of the machine tool and is guided by the various guide units 2 which maintain the correct axial movement and retain the bar radially to prevent the so-called "whip" movements of the bar itself.

The half-bearings 3 of the various bar guide units 2 have been adjusted in the closing position suitable for the diameter of the bar being machined, by means of the appropriate adjustment (vertical rectilinear) movements, actuated by the actuators 9.

As said, during the feeding of the bar, the rod 4 moves forward to push the bar. During the advancement, the rod 4 is guided by the half-bearings 7 of the various rod guide units 6 in the closed position. As the rod 4 advances, in order to avoid the collision of the rod 4 against the bar guide units 2, the programmable electronic control means of the apparatus provides to open the pair of half-bearings 3 which from time to time is located in front of the advancing rod 4, by actuating the respective actuators 9. In this way the rod 4 can pass freely, as the guide units 2, which by now no longer serve to guide the bar, progressively open to the passage of the rod 4, one after the other, while the bar is still guided by the other guide units 2 closer to the exit area near the lathe tool.

A seventh step may comprise the retraction of the rod 4 in the axial direction opposite to the exit direction. The retraction occurs thanks to the slider 8 which pulls back the rod 4 along the sliding path towards the inside of the apparatus. In this step, the rod 4 holds a portion of bar.

This step may comprise the operation of unloading the bar portion in the unloading zone 17 by using the pair of jaws 16 which is activated to grasp the portion. The pair of jaws 16 which is activated is in the most suitable position for retaining the bar portion, depending on the length of the rod 4 used. When the bar portion is held by the jaws 16, it is possible to activate the release of the slider 8 which automatically detaches from the hooking end 28. The slider 8 is then decoupled from the rod 4 and it may, if necessary, return to the starting position to start a new work cycle with the next bar. The bar portion may be discharged into the discharge zone 17 by opening the jaws 16 which leave the bar section free, which can then fall by gravity (guided by a chute).

It should be noted that the operation for centering and locking the rod 4 on the bar may comprise the operations illustrated in a specific manner in Figures 16 and 17. Figure 16 shows the initial position of the centering sleeve 23 with respect to rod 4, initial position in which a pressure exerted from the outside on the centering sleeve 23 is exerted by a pair of half-bearings 3 to perform locking of the rod 4 on the bar (for example by means of the locking pin 34 with return thanks to the unlocking elastic means 35). Figure 17 shows the relative position of the centering sleeve 23 with respect to the rod 4 when the rod has moved axially in the direction of exit along the sliding path to feed the bar to the lathe.

The feeding apparatus 1 allows to feed bars of different diameters without the need to change the guide means of the bar since the guide units 2 can be adjusted automatically according to the diameter of the bar to be machined, with an adjustment which occurs by actuating the actuators 9. There is also no need to change the rod 4 which grips the bar or the slider 8 which moves the bar-pusher rod 4, as well as the guide means of the rod 4 (i.e. guide channel defined by the various guide units 6 of the rod). It has been seen that the various bar guide units 2 open automatically and progressively as the rod 4 and slider 8 pass along the sliding path as the feed progresses during the feeding phase of the bar to the machine tool during machining.

The feeding apparatus comprises a refrigerating lubricating system, for example of a known type and not described in detail, which may use, for example, a refrigerating lubricating fluid (oil).

It is observed that the vertical movement of the various guide units, in particular of the rod guide units 6, facilitates loading of the bar into the loading zone, limiting the overall dimensions of the apparatus and reducing the time required to perform the various maneuvers necessary to load the bar. Similarly, the rod hooking and lifting system opens and closes with a straight vertical movement, reducing in this case also the overall dimensions, the strokes and the processing times.

It is furthermore observed that the operations for extracting and unloading the bar portion are facilitated by virtue of the fact that the movement of the jaws which hold and then unload the portion is not vertical but oblique with respect to the horizontal sliding path, the extractor means may assume a retractable position underneath the guides and it is therefore possible to generate a free space usable for gravity fall also for portions of considerable length.

## Claims

1. Apparatus for feeding bars, comprising:
- first guide means (2) configured to define a horizontal rectilinear sliding path for a bar, said first guide means comprising a plurality of bar guide units (2) each of which comprises at least two semi-bearings (3) cooperating with each other to define an opening for the guided passage of the bar, said semi-bearings (3) being movable with the possibility to assume a plurality of closed positions, in which said semi-bearings (3) define apertures of different widths for the guided passage of bars of different diameters;
- a rod (4) movable along said sliding path, said rod (4) being provided with gripping means (5) configured to take a bar that is coupled to said first guide means (2);
- second guide means (6) for guiding a sliding of said rod (4) along said sliding path;
- a conveyor slider (8) configured to push said rod (4) along said sliding path in such a way as to provide a feed motion to a bar which has been taken by said rod (4);
**characterized in that** at least one of said two semi-bearings (3) is provided with a stop end (18), said apparatus comprising a plurality of cam profiles (19), one for each of said bar guide units (2), each cam profile (19) being arranged to interact in contact with said stop end (18) of the respective bar guide unit (2) to act as an end of stroke defining a maximum stroke of a closing movement of the semi-bearing (3) provided with said stop end (18), each cam profile (19) being adjustable to vary said maximum stroke as a function of a diameter of the bar.

2. Apparatus according to claim 1, wherein said cam profile (19) is adjustable by being positionable in a direction of adjustment.

3. Apparatus according to claim 2, wherein said direction of adjustment is parallel to said sliding path.

4. Apparatus according to any preceding claim, wherein said cam profile (19) comprises an inclined abutting surface.

5. Apparatus according to claim 4, wherein said stop end (18) comprises an abutting counter-surface intended for abutting against said inclined abutting surface.

6. Apparatus according to claim 5, wherein said abutting counter-surface is with the same inclination of said abutting surface.

7. Apparatus according to any preceding claim, comprising a support (20) which carries said plurality of cam profiles (19).

8. Apparatus according to claim 7, wherein a movement of said support (20) is operable to adjust together said plurality of cam profiles (19).

9. Apparatus according to any preceding claim, wherein, for each bar guide unit (2), at least one of said two semi-bearings (3) is provided with an abutment (21), said apparatus comprising a plurality of counter-abutments (22), one for each of said bar guide unit (2), each counter-abutment (22) being arranged to interact in contact with said abutment (21) of the respective bar guide unit (2) to act as an end of stroke defining a maximum stroke of an opening movement of the semi-bearing (3) provided with said abutment (21).

10. Apparatus according to claim 9, wherein the position of each counter-abutment (22) is adjustable to vary said maximum stroke of the opening movement.

11. Apparatus according to claim 10, wherein the position of each counter-abutment (22) is adjustable by means of a screw coupling.

12. Apparatus according to any preceding claim, wherein said rod (4) comprises a first portion having a first diameter and a second portion having a second diameter, said second diameter being less than said first diameter, said gripping means (5) being arranged at one end of said rod (4) that is proximal to said second portion and distal from said first portion, said apparatus comprising a centering sleeve (23) within which said second portion of the rod is slidable.

13. Apparatus according to claim 12, wherein said centering sleeve (23) is surrounded by the semi-bearings (3) of at least one of said bar guide units (2), said semi-bearings (3) that surround said centering sleeve (23) being drivable for locking said centering sleeve exerting a pressure from the outside.

14. Apparatus according to claim 13, wherein said semi-bearings (3) are drivable for locking said centering sleeve by means of a pressure exerted on a locking pin (34) provided with a release mechanism (35) with return elastic means.

15. Apparatus according to any one of claims 12 to 14, wherein said centering sleeve (23) is provided with an inner diameter that is equal to said second diameter and an outer diameter that is equal to said first diameter.

## Patentansprüche

1. Vorrichtung zum Fördern von Stangen, mit:
- einem ersten Führungsmittel (2), das dazu ausgebildet ist, einen horizontalen, geradlinigen Gleitweg für eine Stange zu bilden, wobei das erste Führungsmittel eine Mehrzahl von Stangenführungseinheiten (2) aufweist, von denen jede wenigstens zwei Halblager (3) aufweist, die miteinander zusammenwirken, um eine Öffnung für den geführten Durchlass der Stange zu definieren, wobei die Halblager (3) beweglich sind, mit der Möglichkeit, eine Mehrzahl von geschlossenen Positionen einzunehmen, in denen die Halblager (3) Öffnungen von unterschiedlichen Weiten für den geführten Durchlass von Stangen von unterschiedlichen Durchmessern definieren;
- einem Stab (4), der entlang des Gleitweges beweglich ist, wobei der Stab (4) mit Greifmitteln (5) versehen ist, die dazu ausgebildet sind, eine Stange zu nehmen, die an das erste Führungsmittel (2) gekoppelt ist;
- zweiten Führungsmitteln (6) zum Führen eines Gleitens des Stabes (4) entlang des Gleitweges;
- einen Förderschieber (8), der ausgebildet ist, den Stab (4) entlang des Gleitweges auf eine solche Weise anzustoßen, dass eine Förderbewegung für eine Stange bereitgestellt wird, die von dem Stab (4) aufgenommen wurde;
**dadurch gekennzeichnet, dass** wenigstens eines der beiden Halblager (3) mit einem Stoppende (18) versehen ist, dass die Vorrichtung eine Mehrzahl von Nockenprofilen (19) aufweist, jeweils eines für jede Stangenführungseinheit (2), wobei jedes Nockenprofil (19) dazu angeordnet ist, in Kontakt mit dem Stoppende Anschlagende (18) der betreffenden Stangenführungseinheit (2) zusammenzuwirken, um als ein Ende eines Hubes zu wirken, um einen Maximalhub einer Schließbewegung der Halblager (3) zu definieren, die mit dem Stoppende (18) versehen sind, wobei jedes Nockenprofil (19) einstellbar ist, um den Maximalhub als eine Funktion eines Durchmessers der Stange einzustellen.

2. Vorrichtung nach Anspruch 1, bei der das Nockenprofil (19) einstellbar ist, indem es in einer Einstellrichtung positionierbar ist.

3. Vorrichtung nach Anspruch 2, bei der die Einstellrichtung parallel zu dem Gleitweg ist.

4. Vorrichtung nach irgendeinem vorhergehenden Anspruch, bei der das Nockenprofil (19) eine schräge, anliegende Fläche aufweist.

5. Vorrichtung nach Anspruch 4, bei der das Stoppende (18) eine anliegende Gegenfläche aufweist, die dazu vorgesehen ist, an der schrägen, anliegenden Fläche anzuliegen.

6. Vorrichtung nach Anspruch 5, bei der die anliegende Gegenfläche mit der gleichen Neigung wie die anliegende Fläche ausgebildet ist.

7. Vorrichtung nach irgendeinem vorhergehenden Anspruch, die ferner eine Aufnahme (20) aufweist, die eine Mehrzahl von Nockenprofilen (19) trägt.

8. Vorrichtung nach Anspruch 7, bei der eine Bewegung der Aufnahme (20) ausführbar ist, um die Mehrzahl von Nockenprofilen (19) gemeinsam einzustellen.

9. Vorrichtung nach irgendeinem vorhergehenden Anspruch, bei der für jede Stangenführungseinheit (2) wenigstens eines der beiden Halblager (3) mit einer Anlage (21) versehen ist, wobei die Vorrichtung eine Mehrzahl von Gegenanlagen (22) aufweist, jeweils eine für jede Stangenführungseinheit (2), wobei jede Gegenanlage (22) dazu ausgebildet ist, in Kontakt mit der Anlage (21) der betreffenden Stangenführungseinheit (2) zusammenzuwirken, um als ein Ende eines Hubes zu wirken, das einen maximalen Hub einer Öffnungsbewegung der Halblager (3) definiert, die mit der Anlage (21) versehen sind.

10. Vorrichtung nach Anspruch 9, bei der die Position von jeder Gegenanlage (22) einstellbar ist, um den maximalen Hub der Öffnungsbewegung zu variieren.

11. Vorrichtung nach Anspruch 10, bei der die Position von jeder Gegenanlage (22) mit Hilfe einer Schraubkupplung einstellbar ist.

12. Vorrichtung nach irgendeinem vorhergehenden Anspruch, bei der der Stab (4) einen ersten Bereich aufweist, der einen ersten Durchmesser hat, und einen zweiten Bereich aufweist, der einen zweiten Durchmesser hat, wobei der zweite Durchmesser geringer als der erste Durchmesser ist, wobei die Greifmittel (5) an einem Ende der Stange (4) angeordnet sind, dass dem zweiten Bereich proximal ist und distal von dem ersten Bereich, wobei die Vorrichtung eine Zentrierhülse (23) aufweist, innerhalb derer der zweite Bereich der Stange verschiebbar ist.

13. Vorrichtung nach Anspruch 12, bei der die Zentrierhülse (23) von den Halblagern (3) von wenigstens einer der Stangenführungseinheiten (2) umgeben ist, wobei die Halblager (3), die die Zentrierhülse (23) umgeben, antreibbar sind, um die Zentrierhülse zum Ausüben eines Druckes von außen zu verriegeln.

14. Vorrichtung nach Anspruch 13, bei der die Halblager (3) antreibbar sind, um die Zentrierhülse mit Hilfe eines Druckes zu verriegeln, der von einem Blockierstift (34) ausgeübt wird, der mit einem Lösemechanismus (35) mit einem elastischen Rückführmittel ausgeübt wird.

15. Vorrichtung nach irgendeinem der Ansprüche 12 bis 14, bei der die Zentrierhülse (23) mit einem Innendurchmesser versehen ist, der gleich zu dem zweiten Durchmesser ist, und mit einem Außendurchmesser, der gleich dem ersten Durchmesser ist.

## Revendications

1. Appareil pour l'alimentation en barres, comprenant :
- de premiers moyens de guidage (2) configurés pour définir une trajectoire de coulissement rectiligne horizontale pour une barre, lesdits premiers moyens de guidage comprenant une pluralité d'unités de guidage de barre (2) dont chacune comprend au moins deux semi-paliers (3) coopérant l'un avec l'autre pour définir une ouverture pour le passage guidé de la barre, lesdits demi-paliers (3) étant mobiles avec la possibilité d'adopter une pluralité de positions fermées, dans lesquelles lesdits demi-paliers (3) définissent des orifices de largeurs différentes pour le passage guidé de barres de diamètres différents ;
- une tige (4) mobile le long de ladite trajectoire de coulissement, ladite tige (4) étant pourvue de moyens de préhension (5) configurés pour prendre une barre qui est couplée auxdits premiers moyens de guidage (2) ;
- de deuxièmes moyens de guidage (6) pour guider un coulissement de ladite tige (4) le long de ladite trajectoire de coulissement ;
- un coulisseau convoyeur (8) configuré pour pousser ladite tige (4) le long de ladite trajectoire de coulissement de manière à permettre un mouvement d'alimentation jusqu'à une barre qui a été prise par ladite tige (4) ;
**caractérisé en ce que** l'un au moins desdits deux demi-paliers (3) est pourvu d'une extrémité d'arrêt (18), ledit appareil comprenant une pluralité de profils de came (19), un pour chacune desdites unités de guidage de barre (2), chaque profil de came (19) étant disposé pour interagir en contact avec ladite extrémité d'arrêt (18) de l'unité de guidage de barre (2) respective pour agir comme extrémité de course définissant une course maximum d'un mouvement de fermeture du demi-palier (3) pourvu de ladite extrémité d'arrêt (18), chaque profil de came (19) étant réglable pour varier ladite course maximum en fonction d'un diamètre de la barre.

2. Appareil selon la revendication 1, dans lequel ledit profil de came (19) est réglable en étant positionnable dans une direction de réglage.

3. Appareil selon la revendication 2, dans lequel ladite direction de réglage est parallèle à ladite trajectoire de coulissement.

4. Appareil selon l'une quelconque des revendications précédentes, dans lequel ledit profil de came (19) comprend une surface de butée inclinée.

5. Appareil selon la revendication 4, dans lequel ladite extrémité d'arrêt (18) comprend une contre-surface de butée destinée à buter contre ladite surface de butée inclinée.

6. Appareil selon la revendication 5, dans lequel ladite contre-surface de butée est avec la même inclinaison que ladite surface de butée.

7. Appareil selon l'une quelconque des revendications précédentes, comprenant un support (20) qui porte ladite pluralité de profils de came (19).

8. Appareil selon la revendication 7, dans lequel un mouvement dudit support (20) est utilisable pour régler ensemble ladite pluralité de profils de came (19).

9. Appareil selon l'une quelconque des revendications précédentes, dans lequel, pour chaque unité de guidage de barre (2), l'un au moins desdits deux demi-paliers (3) est pourvu d'une butée (21), ledit appareil comprenant une pluralité de contre-butées (22), une pour chacune desdites unités de guidage de barre (2), chaque contre-butée (22) étant disposée pour interagir en contact avec ladite butée (21) de l'unité de guidage de barre (2) respective pour agir comme extrémité de course définissant une course maximum d'un mouvement d'ouverture du demi-palier (3) pourvu de ladite butée (21).

10. Appareil selon la revendication 9, dans lequel la position de chaque contre-butée (22) est réglable pour varier ladite course maximum du mouvement d'ouverture.

11. Appareil selon la revendication 10, dans lequel la position de chaque contre-butée (22) est réglable à l'aide d'un accouplement à vis.

12. Appareil selon l'une quelconque des revendications précédentes, dans lequel ladite tige (4) comprend une première partie ayant un premier diamètre et une deuxième partie ayant un deuxième diamètre, ledit deuxième diamètre étant inférieur au premier diamètre, lesdits moyens de préhension (5) étant disposés à une extrémité de ladite tige (4) qui est proximale par rapport à ladite deuxième partie et distale par rapport à ladite première partie, ledit appareil comprenant un manchon de centrage (23) à l'intérieur duquel ladite deuxième partie de la tige est apte à coulisser.

13. Appareil selon la revendication 12, dans lequel ledit manchon de centrage (23) est entouré par les demi-paliers (3) de l'une au moins desdites unités de guidage de barre (2), lesdits demi-paliers (3) qui entourent ledit manchon de centrage (23) étant aptes à être entraînés pour verrouiller ledit manchon de centrage (23) exerçant une pression depuis l'extérieur.

14. Appareil selon la revendication 13, dans lequel lesdits demi-paliers (3) sont aptes à être entraînés pour verrouiller ledit manchon de centrage à l'aide d'une pression exercée sur une goupille de verrouillage (34) pourvue d'un mécanisme de déblocage (35) avec des moyens élastiques de rappel.

15. Appareil selon l'une quelconque des revendications 12 à 14, dans lequel ledit manchon de centrage (23) est pourvu d'un diamètre intérieur qui est égal audit deuxième diamètre et un diamètre extérieur qui est égal audit premier diamètre.
